(19) Europäisches Patentamt
European Patent Office
Office européen des brevets

(11) **EP 3 559 609 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **17816663.3**

(22) Anmeldetag: **08.12.2017**

(51) Int Cl.:
*G01F 1/84* (2006.01)     *G01F 25/00* (2006.01)

(86) Internationale Anmeldenummer:
**PCT/EP2017/082035**

(87) Internationale Veröffentlichungsnummer:
**WO 2018/114402 (28.06.2018 Gazette 2018/26)**

(54) **MASSEDURCHFLUSSMESSAUFNEHMER NACH DEM CORIOLIS-PRINZIP UND VERFAHREN ZUM BESTIMMEN EINES MASSEDURCHFLUSSES**

MASS FLOW METER ACCORDING TO THE CORIOLIS PRINCIPLE AND METHOD FOR DETERMINING A MASS FLOW

CAPTEUR DE MESURE DE DÉBIT MASSIQUE FONCTIONNANT SUIVANT LE PRINCIPE DE CORIOLIS ET PROCÉDÉ PERMETTANT DE DÉTERMINER UN DÉBIT MASSIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016 DE 102016125537**

(43) Veröffentlichungstag der Anmeldung:
**30.10.2019 Patentblatt 2019/44**

(73) Patentinhaber: **Endress + Hauser Flowtec AG**
**4153 Reinach (CH)**

(72) Erfinder:
• **KUMAR, Vivek**
**4123 Allschwil (CH)**
• **RIEDER, Alfred**
**84032 Landshut (DE)**
• **TRIEBENBACHER, Simon**
**4053 Basel (CH)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-A1- 1 659 377**     **EP-A2- 1 847 813**
**WO-A1-00/36379**     **WO-A1-2008/147408**
**WO-A1-2009/134827**     **US-A1- 2009 312 962**

• **WERZNER E ET AL: "Proposed method for measurement of flow rate in turbulent periodic pipe flow", JOURNAL OF PHYSICS: CONFERENCE SERIES, INSTITUTE OF PHYSICS PUBLISHING, BRISTOL, GB, Bd. 318, Nr. 2, 22. Dezember 2011 (2011-12-22), Seite 22044, XP020214952, ISSN: 1742-6596, DOI: 10.1088/1742-6596/318/2/022044**

## Beschreibung

Die vorliegende Erfindung betrifft einen Massedurchflussmessaufnehmer nach dem Coriolis-Prinzip und ein und Verfahren zum Bestimmen eines Massedurchflusses.

Gattungsgemäße Massedurchflussmessaufnehmer umfassen mindestens ein schwingfähiges Messrohr zum Führen eines Mediums dessen Durchfluss zu messen ist; mindestens einen Erreger zum Anregen von Vibrationsschwingungen des Messrohrs; mindestens zwei Sensoren zum Erfassen der Vibrationsschwingungen des Messrohrs, und zum Ausgeben von ersten und zweiten Sensorsignalen welche von den Vibrationsschwingungen abhängen; und mindestens eine Betriebs- und Auswerteeinheit zum Treiben des Erregers, zum Erfassen der Sensorsignale und zum Ermitteln eines Massedurchflussmesswerts auf Basis einer Phasendifferenz zwischen den Sensorsignalen, die in erster Näherung proportional zum Massendurchfluss ist.

Es ist bekannt, dass die Phasendifferenz bzw. Zeitdifferenz der Sensorsignale eine Querempfindlichkeit zur Viskosität des Mediums aufweist. In WO 2011/068500 A1, EP 1 659 377 A1 und WO 2000/36379 A1 sind Massedurchflussmessaufnehmer beschrieben, deren Betriebs- und Auswerteeinheit dazu eingerichtet ist, die Viskosität des Messmediums zu ermitteln und eine von der Reynoldszahl abhängige Korrektur dieser Querempfindlichkeit durchzuführen. Wenngleich diese Ansätze für Reynoldszahlen größer 500 brauchbare Ergebnissen erzielen können, lassen sie bei kleineren Reynoldszahlen zu wünschen übrig. Insbesondere mit zunehmender Miniaturisierung besteht daher Bedarf an Messaufnehmen, die hier Abhilfe schaffen. Es ist daher die Aufgabe der vorliegenden Erfindung, einen solchen Messaufnehmer und ein entsprechendes Verfahren bereitzustellen.

Die Aufgabe wird erfindungsgemäß gelöst durch den Massedurchflussmessaufnehmer gemäß dem unabhängigen Patentanspruch 1 und das Verfahren gemäß dem unabhängigen Patentanspruch 7. Weitere Ausgestaltungen der Erfindung ergeben sich aus den abhängigen Patentansprüchen.

Die Erfindung wird nun anhand der in den Zeichnungen dargestellten Ausführungsbeispiele offenbart. Es zeigt:

Fig. 1a: eine Skizze zu Vibrationsschwingungen von planparallelen Platten, zwischen denen sich ein Medium befindet;

Fig. 1b: ein Diagramm, welches eine Eindringtiefe von Vibrationsschwingungen in ein Medium in Abhängigkeit von der kinematischen Viskosität darstellt;

Fig. 1c: eine Skizze zu Scherbewegungen in einem Messrohr;

Fig. 2: ein Diagramm, welches einen relativen Massedurchflussmessfehler für verschiedene Strömungsgeschwindigkeiten über der Reynoldszahl darstellt;

Fig. 3: ein Diagramm, welches einen relativen Massedurchflussmessfehler für verschiedene Strömungsgeschwindigkeiten als Funktion der Stokeszahl darstellt;

Fig. 4a: eine Darstellung eines Ausführungsbeispiels eines erfindungsgemäßen Massedurchflussmessaufnehmers;

Fig. 4b: eine Detailansicht des Ausführungsbeispiels aus Fig. 4a;

Fig. 5a: ein Flussdiagramm eines Ausführungsbeispiels eines erfindungsgemäßen Verfahrens;

Fig. 6a: ein Flussdiagramm eines ersten Details eines Ausführungsbeispiels eines erfindungsgemäßen Verfahrens;

Fig. 6b: ein Flussdiagramm eines zweiten Details eines Ausführungsbeispiels eines erfindungsgemäßen Verfahrens; und

Fig. 6c: ein Flussdiagramm eines zweiten Details eines Ausführungsbeispiels eines erfindungsgemäßen Verfahrens.

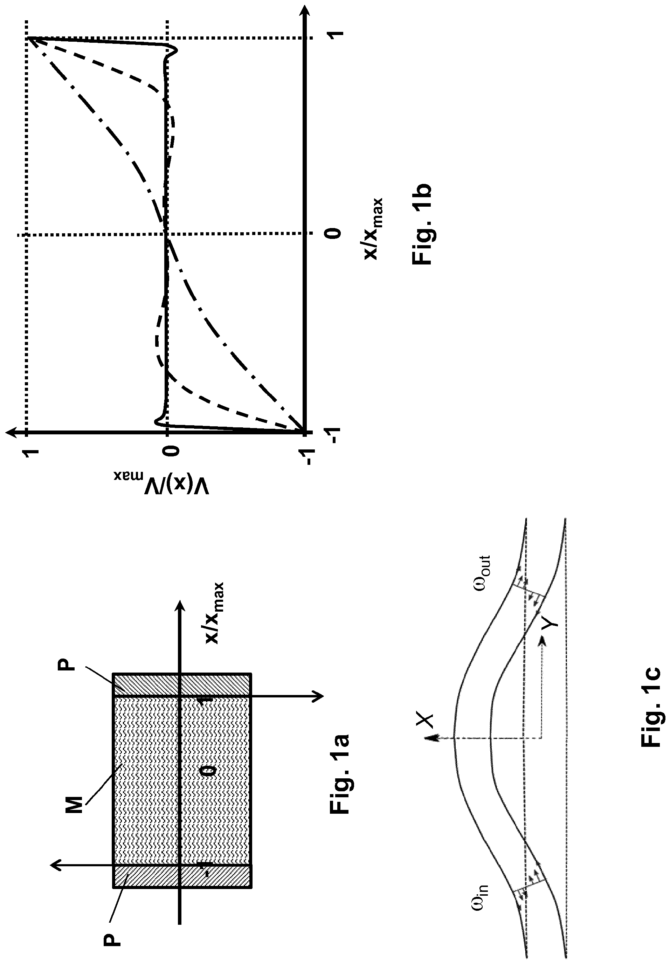

Zur Motivation des der Erfindung zugrundeliegenden Problems und des erfindungsgemäßen Lösungsansatzes sei zunächst auf Fign. 1a bis 1c verwiesen. Fig. 1a zeigt zwei planparallele Platten P die ein nicht strömendes Medium M einschließen und gegenphasig zueinander mit konstantem Abstand Vibrationsschwingungen mit einer Maximalgeschwindigkeit $V_{max}$ ausführen. In abhängigkeit von der Viskosität des Mediums werden die Vibrationsschwingungen unterschiedlich weit in das Medium hinein übertragen, wie in Fig. 1b dargestellt ist für einen Plattenabstand von einigen Centimetern und einer Maximalgeschwindigkeit der Vibrationsschwingungen in der Größenordnung von 1 m/s. Die durchgezogene Linie zeigt die Geschwindigkeitsverteilung für ein Medium mit einer kinematischen Viskosität von etwa 1 cSt. Hier wird nur eine dünne Grenzschicht des Mediums mitbewegt. Die gestrichelte Linie und die strichpunktierte Linie gelten für kinematische Viskositäten von etwa 100 cSt bzw. etwa 1000 cSt. Es ist deutlich zu erkennen, wie mit zunehmender Viskosität die Vibrationsschwingungen immer weiter als Scherschwingungen in das Medium eindringen und insofern Schwingungsenergie an das Medium abgeben, wodurch die Schwingungen der Platten gedämpft werden. Ein Maß für die Eindringtiefe der Vibrationsschwingungen ist eine Stokeszahl St, welche beispielsweise gegeben ist als

$$St = \frac{\sqrt{\nu/f}}{D}$$

wobei $\nu$ die kinematische Viskosität des Mediums ist, $f$ die Frequenz der Vibrationsschwingungen ist und D den Plattenabstand angibt.

Fig. 1c zeigt schematisch ein Messrohr eines Massedurchflussmessaufnehmers, welches in X-Richtung zu Biegeschwingungen im sogenannten $f_1$-Mode bzw. Nutzmode angeregt wird. Die Pfeile bei $\omega_{in}$, und $\omega_{out}$ deuten exemplarisch eine resultierende Schergeschwindigkeitsverteilung an, wie sie in einem im Messrohr enthaltenen Medium auftreten könnte. Bei einem ruhenden Medium führt dies lediglich zu einer Dämpfung des symmetrischen Biegeschwingungsnutzmodes. Wenn das Medium jedoch strömt, wird der antisymmetrische $f_2$-Mode bzw. Coriolis-Mode bei der Nutzfrequenz $f_1$ ausser Resonanz angeregt. Die Überlagerung des antisymmetrischen mit dem symmetrischen Biegeschwingungsnutzmode führt zu Symmetriebrüchen in der Geschwindigkeitsverteilung im Medium und damit zu Querempfindlichkeiten des Schwingungsverhaltens, die über eine gleichmäßige Dämpfung hinausgehen, insbesondere zu einer Querempfindlichkeit der Phasenbeziehung zwischen typischen Schwingungssensorsignalen eines Massedurchflussmessaufnehmers nach dem Coriolis-Prinzip, anhand derer der Massedurchfluss bestimmt wird. Während dieser Effekt bei größeren Reynoldszahlen, von beispielsweise Re > 1000 vernachlässigbar sein mag, ist er bei kleineren Reynldszahlen, beispielsweise Re <100 signifikant und kann relative Messfehler von mehr als 1% verursachen.

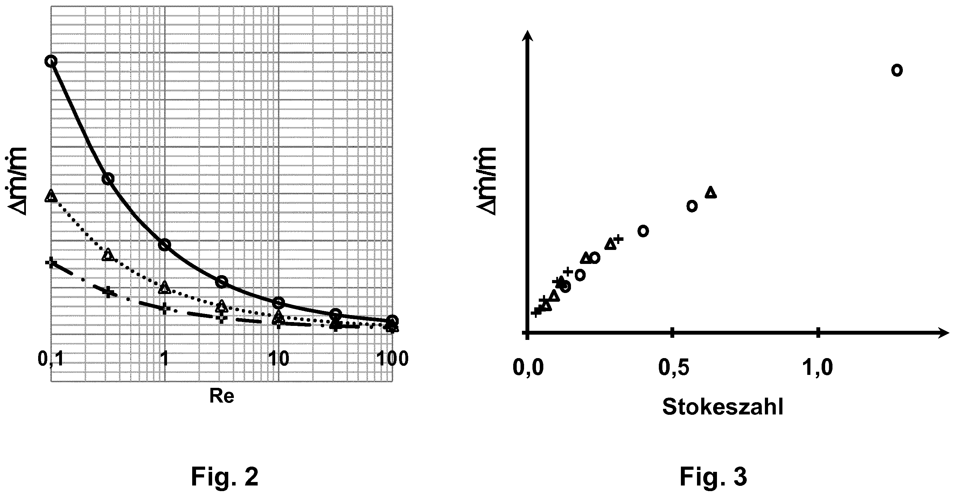

Fig. 2 zeigt typische relative Messfehler $\Delta \dot{m}/\dot{m}$ über der Reynoldszahl Re für einen den obigen Effekt vernachlässigenden Massedurchflussmessaufnehmer. Die Kreuze repräsentieren Daten für eine erste Strömungsgeschwindigkeit von Medien im Messrohr. Die Dreiecke repräsentieren Daten für eine zweite Strömungsgeschwindigkeit von Medien im Messrohr die das Vierfache der ersten Strömungsgeschwindigkeit beträgt. Die Kreise repräsentieren Daten für eine dritte Strömungsgeschwindigkeit von Medien im Messrohr die das Vierfache der zweiten Strömungsgeschwindigkeit beträgt. Die erste Strömungsgeschwindigkeit ist kleiner als 1 m/s, wobei die zweite Strömungsgeschwindigkeit größer als 1 m/s ist. Es zeigt sich, dass die Reynoldszahl für diesen Effekt als Basis für eine Korrektur untauglich ist.

Fig. 3 zeigt typische relative Messfehler $\Delta \dot{m}/\dot{m}$ über der Stokeszahl für die Strömungsgeschwindigkeiten aus Fig. 2, wobei die Symbole hinsichtlich der Geschwindigkeiten entsprechende Bedeutungen haben. Der relative Messfehler steigt monoton mit der Stokeszahl und die Korrelation zwischen dem relativem Messfehler und der Stokeszahl erscheint im Wesentlichen unabhängig von der Strömungsgeschwindigkeit bzw. Reynoldszahl des Mediums. Damit ist ein Ansatz zur Kompensation der Querempfindlichkeit der Vibrationsschwingungen gefunden. Das erfindungsgemäße Verfahren wird weiter näher erläutert.

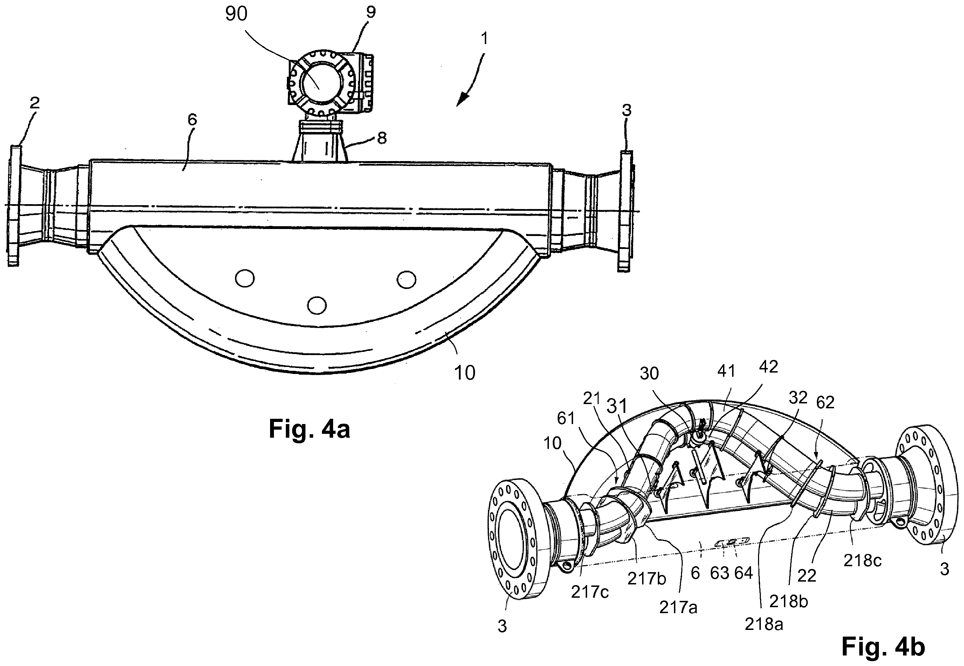

Das in Fign. 4a und 4b dargestellte Ausführungsbeispiel einse erfindungsgemäßen Massedurchflussmessaufnehmers 1 umfasst einen ersten Anschlussflansch 2 und einen zweiten Anschlussflansch 3 zum Einbau in eine Rohrleitung. Die Flansche 2, 3 weisen jeweils einen Sammler auf, welche durch ein starres Trägerrohr 6 miteinander verbunden sind. Von dem Trägerrohr 6 erstreckt sich seitlich ein Aufnehmergehäuse 10 in dem zwei gebogen Messrohre 21, 22 verlaufen, deren Enden beidseitig in jeweils einem Sammlern zusammengefasst sind. Das Trägerrohr 6 weist zwei seitliche Durchbrüche 61, 62 auf, durch welche die Messrohre 21, 22 aus dem Trägerrohr 6 heraus und wieder hinein geführt sind. Die Messrohre 21, 22 sind nahe der beiden Sammler jeweils mit einigen Knotenplatten 217a, 217b, 217c, 218a, 218b, 218c gekoppelt, durch welche das Schwingungsverhalten des Messrohrpaars festgelegt wird. Zum Anregen von Biegeschwingungen ist zwischen den beiden Messrohren 21, 22 im Bereich von Scheitelbögen 41, 42 der Messrohre mittig ein elektrodynamischer Erreger 30 angeordnet. Zwischen den Scheitelbögen 41, 42 und den jeweils nächsten Knotenplatten 217a, 218a sind symmetrisch zu den Scheitelbögen ein erster elektrodynamischer Schwingungssensor 31 und ein zweiter elektrodynamischer Schwingungssensor 32 zwischen den beiden Messrohren 21, 22 angeordnet, um die Messrohrschwingungen zu erfassen. Das Trägerrohr 6 weist in einer Montagefläche 63 eine elektrische Durchführung 64 auf, durch welche (hier nicht dargestellte) Signalleitungen geführt sind. An der Montagefläche 63 ist ein Anschlussadapter 8 mit einem Messumformer 9 angeschlossen, welcher eine Betriebs- und Auswerteschaltung 90 enthält. Die Betriebs- und Auswerteschaltung 90 ist über die Signalleitungen mit dem Erreger 30 und den Schwingungssensoren 31 verbunden, um ersteren zu treiben und die Signale letzterer zu erfassen und auszuwerten, um mittels des erfindungsgemäßen Verfahrens einen Massedurchflussmesswert zu bestimmen, der über Signal- und Versorgungsleitungen des Messumformers ausgegeben werden kann.

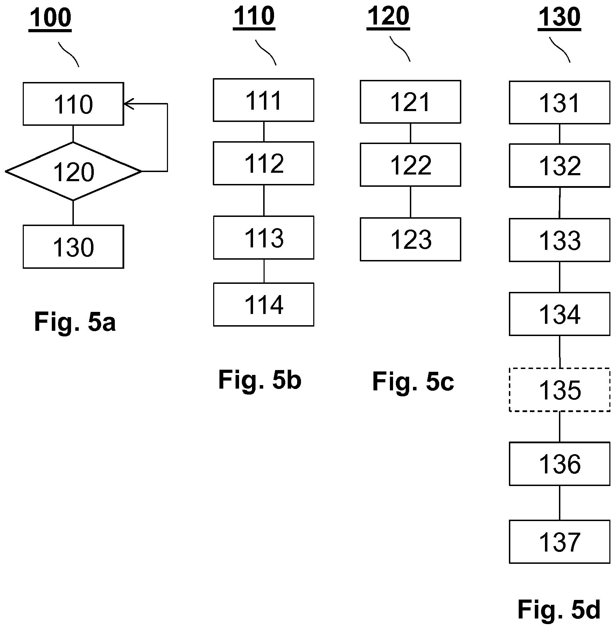

Wie in Fig. 5a dargestellt, wird bei einem bevorzugten Ausführungsbeispiel des erfindungsgemäßen Verfahrens 100, in einem ersten Schritt 110 zunächst ein vorläufiger Massedurchflussmesswert generiert, welcher ggf. die Kompensation anderer Störeinflüsse umfassen kann.

In einem zweiten Schritt 120 erfolgt ein Test, ob eine kritische Reynoldzahl $Re_{krit}$ von beispielsweise $Re_{krit} =100$ unterschritten ist.

Falls ja erfolgt dann in einem dritten Schritt 130 die Kompensation der Querempfindlichkeit gegenüber der Stokeszahl, ansonsten beginnt das Verfahren wieder mit dem ersten Schritt 110.

Der erste Schritt 110 kann beispielsweise die Abb. 5b dargestellten Teilschritte enthalten: Der erste Schritt beginnt mit dem Treiben des Erregers 111, zum Anregen von Vibrationsschwingungen. Anschließend erfolgt das Erfassen der Sensorsignale 112 der beiden Schwingungssensoren. Es folgt das Ermitteln einer Phasendifferenz bzw. Zeitdifferenz 113 zwischen den Sensorsignalen. Anhand der ermittelten Phasendifferenz bzw. Zeitdifferenz erfolgt schließlich das Ermitteln eines vorläufigen Massedurchflussmesswerts 114 welcher in erster Näherung proportional zur Phasendifferenz bzw. Zeitdifferenz ist.

Der zweite Schritt 120 erfordert (sofern noch nicht verfügbar) die Ermittlung der aktuellen Reynoldszahl. Hierzu erfolgt zunächst das Ermitteln eines aktuellen Viskositätsmesswerts 121 aus dem Verhältnis von einem Erregerstromsignal mit dem der Erreger gespeist wird und der Amplitude der Signale der Schwingungssensoren. Anschließend erfolgt das Berechnen eines aktuellen Werts Re der Reynoldszahl 122 anhand des vorläufigen Massedurchflussmesswerts $\dot{m}$, und des Viskositätsmesswerts $\eta$ gemäß Re= $\dot{m}$ / ($\eta \pi$ R), wobei R der Radius eines Messrohrs ist. Es folgt die Prüfung 123, ob der aktuelle Wert der Reynoldszahl Re die kritische Reynoldszahl Re$_{krit}$ unterschreitet.

Der dritte Schritt 130 umfasst im Einzelnen, wie in Fig. 5d dargestellt das Ermitteln eines aktuellen Werts für die Eigenfrequenz f eines Biegeschwingungsmodes 131, das Ermitteln eines Dichtemesswertes des im Messrohr enthaltenen Mediums 132 anhand des Werts für die Eigenfrequenz, berechnen eines Werts für die kinematische Viskosität v133 anhand des Viskositätsmesswerts $\eta$ und des Dichtemesswerts p gemäß v = $\eta$ / p. Es folgt die Berechnung der Stokeszahl St 134 gemäß

$$St = \frac{\sqrt{v/f}}{R}.$$

In einem optionalen Schritt 135 kann geprüft werden, ob die Stokeszahl St mindestens eine eines kritischen Wert St$_{krit}$ von beispielsweise St$_{krit}$ = 0,05 überschreitet. Falls nicht kann auf die Kompensation verzichtet werden, weil ihr Effekt vernachlässigbar ist.

Die Bestimmung des von der Stokeszahl abhängigen Messfehlers 136 erfolgt gemäß:

$$\frac{\Delta\dot{m}_{St}}{\dot{m}} = C_1 St + C_0,$$

wobei $C_1$ und $C_2$ gerätespezifische Konstanten sind.

Das Verfahren schließt mit der Korrektur 137 des vorläufigen Massedurchflussmesswerts um den von der Stokeszahl abhängigen Messfehlers $\Delta\dot{m}_{St}$.

**Patentansprüche**

1. Massedurchflussmessaufnehmer (1) nach dem Coriolis-Prinzip, umfassend:

mindestens ein schwingfähiges Messrohr (21, 22) zum Führen eines Mediums dessen Durchfluss zu messen ist;
mindestens einen Erreger (30) zum Anregen von Vibrationsschwingungen des Messrohrs;
mindestens zwei Sensoren (31, 32) zum Erfassen der Vibrationsschwingungen des Messrohrs und zum Ausgeben von ersten und zweiten Sensorsignalen welche von den Vibrationsschwingungen abhängen;
und mindestens eine Betriebs- und Auswerteeinheit (90) zum Treiben des Erregers, zum Erfassen der Sensorsignale und zum Ermitteln eines Massedurchflussmesswerts auf Basis einer Phasendifferenz bzw. Zeitdifferenz zwischen den Sensorsignalen, die in erster Näherung proportional zum Massendurchfluss ist;
wobei das Schwingungsverhalten des Messrohrs, eine Querempfindlichkeit zur Viskosität des Mediums aufweist,
**dadurch gekennzeichnet,**
**dass** für Reynoldszahlen zumindest unterhalb eines unteren Reynoldszahlgrenzwerts die Querempfindlichkeit mit einer Stokeszahl korreliert,
**dass** die Phasendifferenz bzw. Zeitdifferenz der Sensorsignale die mit der Stokeszahl korrelierende Querempfindlichkeit aufweist,
**dass** die Betriebs- und Auswerteeinheit (90) dazu eingerichtet ist, zumindest bei Reynoldszahlen unterhalb des unteren Reynoldszahlgrenzwerts einen aktuellen Wert der Stokeszahl zu bestimmen in Abhängigkeit von einem Durchmesser des Messrohrs, von einer charakteristischen Schwingungsfrequenz des Messrohrs und von einer Viskosität des im Messrohr strömenden Mediums, wobei die Stokeszahl ein Maß ist für eine Eindringtiefe der Vibrationsschwingungen von dem Messrohr in das Medium, und
**dass** die Betriebs- und Auswerteeinheit dazu eingerichtet ist, den Einfluss der Querempfindlichkeit in Abhängigkeit des aktuellen Werts der Stokeszahl bei der Ermittlung des Massedurchflusses zu kompensieren.

2. Massedurchflussmessaufnehmer nach Anspruch 1, wobei die Betriebs- und Auswerteschaltung dazu eingerichtet ist, die Stokeszahl als Funktion der kinematischen Viskosität eines in dem Messrohr strömenden Mediums zu ermitteln, insbesondere eine monotone Funktion der Viskosität, beispielsweise eine Funktion der Wurzel der Viskosität.

3. Massedurchflussmessaufnehmer nach Anspruch 1 oder 2, wobei die charakteristische Schwingungsfrequenz gleich einer aktuellen Anregungsfrequenz, insbesondere eines Biegeschwingungsnutzmodes ist.

4. Massedurchflussmessaufnehmer nach Anspruch 3, wobei die charakteristische Schwingungsfrequenz eine Eigenfrequenz einer Messrohrschwingung bei einem Medium mit einer charakteristischen Dichte ist, wobei die charakteristische Dichte ausgewählt ist aus: einer aktuellen Dichte des im Messrohr befindlichen Mediums, einer über einen über einen Temperaturbereich und/oder einen Druckbereich gemittelten Dichte des im Messrohr befindlichen Mediums oder einer Referenzdichte.

5. Messaufnehmer nach einem der vorhergehenden Ansprüche, wobei die Betriebs- und Auswerteeinheit dazu eingerichtet ist, einen Viskositätsmesswert für das im Messrohr strömende Medium, anhand einer Dämpfung einer Messrohrschwingung zu bestimmen, insbesondere anhand eines Verhältnisses zwischen einem eine Erregerleistung repräsentierenden Signal und einem eine Schwingungsamplitude repräsentierenden Signal.

6. Messaufnehmer nach einem der vorhergehenden Ansprüche, wobei die Betriebs- und Auswerteeinheit dazu eingerichtet ist, den Einfluss der Querempfindlichkeit mittels eines Polynoms, einer linearen Funktion, einer logarithmischen Funktion, oder einer anderen monotonen Funktion der Stokeszahl zu kompensieren.

7. Verfahren zum Bestimmen eines Massedurchflusses mit einem Massedurchflussmessaufnehmer nach dem Coriolis-Prinzip nach einem der vorhergehenden Ansprüche,
wobei das Verfahren die folgenden Schritte umfasst:

   Treiben des Erregers, zum Anregen von Vibrationsschwingungen;
   Erfassen der Sensorsignale;
   Ermitteln einer Phasendifferenz bzw. Zeitdifferenz zwischen den Sensorsignalen,
   Ermitteln eines Massedurchflussmesswerts auf Basis der Phasendifferenz bzw. Zeitdifferenz, die in erster Näherung proportional zum Massendurchfluss ist;
   **dadurch gekennzeichnet,**
   **dass** zumindest bei Reynoldszahlen unterhalb des unteren Reynoldszahlgrenzwerts ein aktueller Wert der Stokeszahl bestimmt wird in Abhängigkeit von einem Durchmesser des Messrohrs, von einer charakteristischen Schwingungsfrequenz des Messrohrs und von einer Viskosität des im Messrohr strömenden Mediums, wobei die Stokeszahl ein Maß ist für eine Eindringtiefe der Vibrationsschwingungen von dem Messrohr in das Medium, und
   **dass** der Einfluss der Querempfindlichkeit in Abhängigkeit des aktuellen Werts der Stokeszahl bei der Ermittlung des Massedurchflusses kompensiert wird.

8. Verfahren nach Anspruch 7, wobei die Stokeszahl als eine Funktion der kinematischen Viskosität des Mediums ermittelt wird, insbesondere als eine monotone Funktion der kinematischen Viskosität, beispielsweise als eine Funktion der Wurzel der kinematischen Viskosität.

9. Verfahren nach Anspruch 7 oder 8, wobei die charakteristische Schwingungsfrequenz gleich einer aktuellen Anregungsfrequenz, insbesondere eines Biegeschwingungsnutzmodes ist.

10. Verfahren nach einem der Ansprüche 7 bis 9, wobei die charakteristische Schwingungsfrequenz eine Eigenfrequenz einer Messrohrschwingung bei einem Medium mit einer charakteristischen Dichte ist, wobei die charakteristische Dichte ausgewählt ist aus: einer aktuellen Dichte des im Messrohr befindlichen Mediums, einer über einen über einen Temperaturbereich und/oder einen Druckbereich gemittelten Dichte des im Messrohr befindlichen Mediums oder einer Referenzdichte.

11. Verfahren nach einem der Ansprüche 7 bis 10, wobei ein Viskositätsmesswert für das im Messrohr strömende Medium anhand einer Dämpfung einer Messrohrschwingung bestimmt wird, insbesondere anhand eines Verhältnisses zwischen einem einen Erregerstrom repräsentierenden Signal und einem eine Schwingungsamplitude repräsentierenden Signal.

12. Verfahren nach einem der Ansprüche 7 bis 11, wobei der Einfluss der Querempfindlichkeit mittels eines Polynoms, einer linearen Funktion, einer logarithmischen Funktion, oder einer anderen monotonen Funktion der Stokeszahl kompensiert wird.

13. Verfahren nach einem der Ansprüche 7 bis 12, wobei das in dem Messrohr strömende Medium ein homogenes Medium ist, welches insbesondere frei ist von Feststoffen oder freien Blasen, die durch die Messrohrschwingungen relativ zu einer flüssigen Phase des Mediums beschleunigt werden.

**Claims**

1. Mass flow sensor (1) according to the Coriolis principle, comprising:

   at least a measuring tube which can vibrate (21, 22) designed to conduct a medium whose flow is to be measured;

at least one exciter (30) designed to excite vibrations of the measuring tube;

at least two sensors (31, 32) designed to measure the vibrations of the measuring tube and to output first and second sensor signals that depend on the vibration oscillations;

and at least an operation and evaluation unit (90) to drive the exciter, to capture the sensor signals and to determine a mass flow measured value on the basis of a phase difference or a time difference between the sensor signals, said value being, in a first approximation, proportional to the mass flow;

wherein the vibration behavior of the measuring tube has a cross-sensitivity to the viscosity of the medium,

**characterized**

**in that** the cross-sensitivity correlates to a Stokes number for Reynolds numbers at least below a lower Reynolds number limit value,

**in that** the phase difference or the time difference of the sensor signals has a cross-sensitivity correlating to the Stokes number,

**in that** the operation and evaluation unit (90) is designed, at least for Reynolds numbers below the lower Reynolds number limit value, to determine a current value of the Stokes number depending on a diameter of the measuring tube, a characteristic vibration frequency of the measuring tube and a viscosity of the medium flowing through the measuring tube, wherein the Stokes number is an indicator of the depth of penetration of the vibration oscillations of the measuring tube in the medium, and

**in that** the operation and evaluation unit is designed to compensate for the influence of the cross-sensitivity depending on the current value of the Stokes number when determining the mass flow.

2. Mass flow sensor as claimed in Claim 1, wherein the operation and evaluation circuit is designed to determine the Stokes number as a function of the kinematic viscosity of a medium flowing through the measuring tube, particularly a monotonic function of the viscosity, for example a function of the root of the viscosity.

3. Mass flow sensor as claimed in Claim 1 or 2, wherein the characteristic vibration frequency is equal to a current excitation frequency, particularly of a flexural vibration useful mode.

4. Mass flow sensor as claimed in Claim 3, wherein the characteristic vibration frequency is a natural frequency of a measuring tube vibration in the case of a medium with a characteristic density, wherein the characteristic density is selected from a current density of the medium located in the measuring tube, a density - averaged over a temperature range and/or pressure range - of the medium located in the measuring tube, or a reference density.

5. Sensor as claimed in one of the previous claims, wherein the operation and evaluation unit is designed to determine a viscosity measured value for the medium flowing through the measuring tube on the basis of an attenuation of a measuring tube vibration, particularly on the basis of a ratio between a signal representing an excitation current and a signal representing a vibration amplitude.

6. Sensor as claimed in one of the previous claims, wherein the operation and evaluation unit is designed to compensate for the influence of the cross-sensitivity using a polynomial, a linear function, a logarithmic function or another monotonic function of the Stokes number.

7. Procedure designed to determine a mass flow using a mass flow sensor according to the Coriolis principle as claimed in one of the previous claims, wherein said procedure comprises the following steps:

Driving of the exciter to excite vibration oscillations;

Measurement of the sensor signals;

Determination of a phase difference or a time difference between the sensor signals;

Determination of a mass flow measured value on the basis of the phase difference or the time difference which, at first approximation, is proportional to the mass flow;

**characterized in that**

a current value of the Stokes number is determined at least for Reynolds numbers below the lower Reynolds number limit value depending on a diameter of the measuring tube, a characteristic vibration frequency of the measuring tube and a viscosity of the medium flowing through the measuring tube, wherein the Stokes number is an indicator of the depth of penetration of the vibration oscillations of the measuring tube in the medium, and

the influence of the cross-sensitivity is compensated for depending on the current value of the Stokes number when determining the mass flow.

8. Procedure as claimed in Claim 7, wherein the Stokes number is determined as a function on the kinematic viscosity of the medium, particularly as a monotonic function of the kinematic viscosity, for example as a function of the root of the kinematic viscosity.

9. Procedure as claimed in Claim 7 or 8, wherein the characteristic vibration frequency is equal to a current excitation frequency, particularly of a flexural vibration useful mode.

10. Procedure as claimed in one of the Claims 7 to 9, wherein the characteristic vibration frequency is a natural frequency of a measuring tube vibration in the case of a medium with a characteristic density, wherein the characteristic density is selected from a current density of the medium located in the measuring tube, a density - averaged over a temperature range and/or pressure range - of the medium located in the measuring tube, or a reference density.

11. Procedure as claimed in one of the Claims 7 to 10, wherein a viscosity measured value is determined for the medium flowing through the measuring tube on the basis of an attenuation of a measuring tube vibration, particularly on the basis of a ratio between a signal representing an excitation current and a signal representing a vibration amplitude.

12. Procedure as claimed in one of the Claims 7 to 11, wherein the influence of the cross-sensitivity is compensated for using a polynomial, a linear function, a logarithmic function or another monotonic function of the Stokes number.

13. Procedure as claimed in one of the Claims 7 to 12, wherein the medium flowing through the measuring tube is a homogeneous medium, which is particularly free from solid materials or air bubbles, which are accelerated by the vibrations of the measuring tube in relation to a liquid phase of the medium.

## Revendications

1. Débitmètre massique (1) selon le principe Coriolis, comprenant :

   au moins un tube de mesure apte à vibrer (21, 22) destiné à guider un produit dont le débit doit être mesuré ;
   au moins un excitateur (30) destiné à l'excitation en vibrations du tube de mesure ;
   au moins deux capteurs (31, 32) destinés à mesurer les vibrations du tube de mesure et destinés à délivrer des premiers et deuxièmes signaux de capteur, lesquels sont fonction des vibrations ;
   et au moins une unité de commande et d'exploitation (90) destinée à la commande de l'excitateur, à l'acquisition des signaux de capteur et à la détermination d'une valeur mesurée de débit massique sur la base d'une différence de phase ou d'une différence de temps entre les signaux de capteur, laquelle valeur est, en première approximation, proportionnelle au débit massique ;
   le comportement de vibration du tube de mesure présentant une sensibilité croisée à la viscosité du produit,
   **caractérisé**
   **en ce que**, pour les nombres de Reynolds au moins inférieurs à une valeur limite inférieure du nombre de Reynolds, la sensibilité croisée est corrélée avec un nombre de Stokes,
   **en ce que** la différence de phase ou la différence de temps des signaux de capteur présente une sensibilité croisée en corrélation avec le nombre de Stokes,
   **en ce que** l'unité de commande et d'exploitation (90) est conçue, au moins pour les nombres de Reynolds inférieurs à la valeur limite inférieure du nombre de Reynolds, pour déterminer une valeur actuelle du nombre de Stokes en fonction d'un diamètre du tube de mesure, d'une fréquence de vibration caractéristique du tube de mesure et d'une viscosité du produit s'écoulant dans le tube de mesure, le nombre de Stokes étant une mesure de la profondeur de pénétration des vibrations du tube de mesure dans le produit, et
   **en ce que** l'unité de commande et d'exploitation est conçue pour compenser l'influence de la sensibilité croisée en fonction de la valeur actuelle du nombre de Stokes lors de la détermination du débit massique.

2. Débitmètre massique selon la revendication 1, pour lequel le circuit commande et d'exploitation est conçu pour déterminer le nombre de Stokes en fonction de la viscosité cinématique d'un produit s'écoulant dans le tube de mesure, notamment une fonction monotone de la viscosité, par exemple une fonction de la racine de la viscosité.

3. Débitmètre massique selon la revendication 1 ou 3, pour lequel la fréquence de vibration caractéristique est égale à une fréquence d'excitation actuelle, notamment d'un mode utile de vibration de flexion.

4. Débitmètre massique selon la revendication 3, pour lequel la fréquence de vibration caractéristique est une fréquence propre d'une vibration du tube de mesure dans le cas d'un produit présentant une densité caractéristique, la densité caractéristique étant sélectionnée à partir d'une densité actuelle du produit se trouvant dans le tube de mesure, une densité - moyennée sur une gamme de température et/ou une gamme de pression - du produit se trouvant dans le tube de mesure, ou une densité de référence.

5. Débitmètre massique selon l'une des revendications précédentes, pour lequel l'unité de commande et d'exploitation est conçue pour déterminer une valeur de mesure de la viscosité du produit s'écoulant dans le tube de mesure sur la base d'une atténuation d'une vibration du tube de mesure, notamment sur la base d'un rapport entre un signal représentant une puissance d'excitation et un signal représentant une amplitude de vibration.

**6.** Débitmètre massique selon l'une des revendications précédentes, pour lequel l'unité de commande et d'exploitation est conçue pour compenser l'influence de la sensibilité croisée au moyen d'un polynôme, d'une fonction linéaire, d'une fonction logarithmique ou d'une autre fonction monotone du nombre de Stokes.

**7.** Procédé destiné à la détermination d'un débit massique à l'aide d'un débitmètre massique d'après le principe Coriolis selon l'une des revendications précédentes, le procédé comprenant les étapes suivantes :

Commande de l'excitateur en vue de l'excitation du tube de mesure en vibrations ;
Mesure des signaux de capteur ;
Détermination d'une différence de phase ou d'une différence de temps entre les signaux de capteur ;
Détermination d'une valeur mesurée de débit massique sur la base de la différence de phase ou de la différence de temps qui, en première approximation, est proportionnelle au débit massique ;
**caractérisé**
**en ce qu'**au moins pour les nombres de Reynolds inférieurs à la valeur limite inférieure du nombre de Reynolds, une valeur actuelle du nombre de Stokes est déterminée en fonction d'un diamètre du tube de mesure, d'une fréquence de vibration caractéristique du tube de mesure et d'une viscosité du produit s'écoulant dans le tube de mesure, le nombre de Stokes étant une mesure de la profondeur de pénétration des vibrations du tube de mesure dans le produit, et
**en ce que** l'influence de la sensibilité croisée est compensée en fonction de la valeur actuelle du nombre de Stokes lors de la détermination du débit massique.

**8.** Procédé selon la revendication 7, pour lequel le nombre de Stokes est déterminé en tant que fonction de la viscosité cinématique du produit, notamment en tant que fonction monotone de la viscosité cinématique, par exemple en tant que fonction de la racine de la viscosité cinématique.

**9.** Procédé selon la revendication 7 ou 8, pour lequel la fréquence de vibration caractéristique est égale à une fréquence d'excitation, notamment d'un mode utile de vibration de flexion.

**10.** Procédé selon l'une des revendications 7 à 9, pour lequel la fréquence de vibration caractéristique est une fréquence propre d'une vibration du tube de mesure dans le cas d'un produit avec une densité caractéristique, la densité caractéristique étant sélectionnée à partir d'une densité actuelle du produit se trouvant dans le tube de mesure, une densité - moyennée sur une gamme de température et/ou une gamme de pression - du produit se trouvant dans le tube de mesure, ou une densité de référence.

**11.** Procédé selon l'une des revendications 7 à 10, pour lequel une valeur mesurée de viscosité est déterminée pour le produit s'écoulant dans le tube de mesure sur la base d'un amortissement d'une vibration du tube de mesure, notamment sur la base d'un rapport entre un signal représentant le courant d'excitation et un signal représentant une amplitude de vibration.

**12.** Procédé selon l'une des revendications 7 à 11, pour lequel l'influence de la sensibilité croisée est compensée au moyen d'un polynôme, une fonction linéaire, une fonction logarithmique ou une autre fonction monotone du nombre de Stokes.

**13.** Procédé selon l'une des revendications 7 à 12, pour lequel le produit s'écoulant dans le tube de mesure est un produit homogène, lequel est notamment exempt de matières solides ou de bulles d'air, qui sont accélérées par les vibrations du tube de mesure par rapport à une phase liquide du produit.

Fig. 1b

Fig. 1a

Fig. 1c

Fig. 3

Fig. 2

Fig. 4a

Fig. 4b

**100**

```
┌─────────┐
│   110   │◄──┐
└────┬────┘   │
   ◇─┴─◇      │
  ◇  120  ◇───┘
   ◇─┬─◇
┌────┴────┐
│   130   │
└─────────┘
```

**Fig. 5a**

**110**

```
┌─────────┐
│   111   │
└────┬────┘
┌────┴────┐
│   112   │
└────┬────┘
┌────┴────┐
│   113   │
└────┬────┘
┌────┴────┐
│   114   │
└─────────┘
```

**Fig. 5b**

**120**

```
┌─────────┐
│   121   │
└────┬────┘
┌────┴────┐
│   122   │
└────┬────┘
┌────┴────┐
│   123   │
└─────────┘
```

**Fig. 5c**

**130**

```
┌─────────┐
│   131   │
└────┬────┘
┌────┴────┐
│   132   │
└────┬────┘
┌────┴────┐
│   133   │
└────┬────┘
┌────┴────┐
│   134   │
└────┬────┘
┌ ─ ─┴─ ─ ┐
    135
└ ─ ─┬─ ─ ┘
┌────┴────┐
│   136   │
└────┬────┘
┌────┴────┐
│   137   │
└─────────┘
```

**Fig. 5d**

EP 3 559 609 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011068500 A1
- EP 1659377 A1

- WO 200036379 A1